# EUROPÄISCHE PATENTSCHRIFT

(11) **EP 1 934 039 B1**
(45) Veröffentlichungstag und Bekanntmachung des Hinweises auf die Patenterteilung: **04.09.2013**
(21) Anmeldenummer: 06806019.3
(22) Anmeldetag: 04.10.2006
(51) Int. Cl.: B32B 5/26, D04H 1/46

(54) **STABILES FASERLAMINAT SOWIE VERFAHREN UND VORRICHTUNG ZUR HERSTELLUNG DESSELBEN**
STABLE FIBER LAMINATE, AND METHOD AND DEVICE FOR THE PRODUCTION THEREOF
STRATIFIE DE FIBRES STABLE ET PROCEDE ET SYSTEME POUR PRODUIRE CE STRATIFIE

(30) Priorität: 10.10.2005 DE 102005048758
(43) Veröffentlichungstag der Anmeldung: 25.06.2008
(73) Patentinhaber: Trützschler Nonwovens & Man-Made Fibers GmbH, 63329 Egelsbach (DE)
(72) Erfinder: MÜNSTERMANN, Ullrich, 63329 Egelsbach (DE)
(74) Vertreter: von Kreisler Selting Werner
(86) Internationale Anmeldenummer: PCT/EP2006/009579
(87) Internationale Veröffentlichungsnummer: WO 2007/042180

(56) Entgegenhaltungen:
- EP-A- 1 524 350
- EP-A2- 1 445 366
- WO-A-01/51693
- WO-A-01/53588
- WO-A-2005/012618
- WO-A2-03/035955
- WO-A2-2004/092472
- DE-A1-102004 030 393
- US-A- 5 144 729
- US-A1- 2003 019 088

## Beschreibung

Die Erfindung betrifft ein Faserlaminat, umfassend zwei Trägervliese und ein zwischen den beiden Trägervliesen angeordnetes absorptionsfähiges Fasermaterial, das durch Wasservernadelung verfestigt ist, sowie ein Verfahren und eine Vorrichtung zur Herstellung eines solchen Faserlaminats.

Aus der EP 1 250 482 ist ein Verfahren zur Herstellung eines Verbundvlieses aus zumindest einem Trägervlies, zum Beispiel einem Spunbondvlies, und einer auf dieses Trägervlies aufgelegten Woodpulpschicht zur Herstellung eines Hygieneprodukts bekannt, wobei das Spunbondvlies vor der Beschichtung mit dem superabsorbierenden Material zur Vorverfestigung trockenverdichtet, dann die Woodpulpschicht aufgegeben und beide zusammen mittels Wasservernadelung verfestigt und dann getrocknet werden.

Des Weiteren beschreibt die EP 1 524 350 ein Faserlaminat, insbesondere ein saugfähiges Reinigungstuch aus zumindest einem vorverfestigten Spinnvlies aus Filamenten und aus zumindest einer Faserschicht aus hydrophilen Fasern, welches hydrodynamisch verfestigt ist, und wobei in die Oberfläche des hydrodynamisch verfestigten Faserlaminats Prägedeformationen eingebracht werden. Bei der Herstellung solcher Wisch- und Reinigungstücher werden die beiden Auflagen aus vorverfestigten Spinnvliesen und die innere Lage aus Air-Laid-Pulp durch eine Wasserstrahlverfestigung miteinander verbunden.

Derartige Produkte zeigen im Hinblick auf die Kosten und Festigkeiten befriedigende Eigenschaften, jedoch wird in der Praxis die zu geringe Dicke und Absorptionsfähigkeit bemängelt. Des Weiteren ist die Delaminationsfestigkeit der einzelnen Lagen durch die Wasserstrahlbehandlung nicht ausreichend, so dass sich vor allem in angefeuchtetem Zustand die Lagen leicht wieder voneinander trennen. Dieser Nachteil wird teilweise durch die oben genannte EP 1 524 350

Aus der US 2003/019 088 A1 ist ein strukturiertes Vlies bekannt, welches durch Wasserstrahlbeaufschlagung in Verbindung mit einer gelochten Schablone erzeugt wird.

Aus der US-A-5 144 729 ist ein Faserlaminat bekannt, welches aus 2 Vliesen eines absobtionsfähigen Kurzfasermaterials und einem dazwischen liegenden Trägervlies besteht.

mittels Vorprägung der eingesetzten Vlieslagen oder durch Nachprägen des verfestigten Endprodukts behoben.

Aufgabe der vorliegenden Erfindung ist es, ein Faserlaminat sowie ein Verfahren und eine Vorrichtung zur Herstellung desselben anzugeben, das ausreichende Stabilität gegen Delamination und hohe Saugfähigkeit aufweist.

Die Aufgabe wird gelöst durch ein Faserlaminat nach dem Patentanspruch 1 sowie ein entsprechendes Verfahren und eine entsprechende Vorrichtung zur Herstellung eines solchen Faserlaminats.

Das erfindungsgemäße Faserlaminat umfasst zwei Trägervliese und ein zwischen den beiden Trägervliesen angeordnetes absorptionsfähiges Fasermaterial, das durch Wasservernadelung verfestigt ist, wobei über die Fläche des Faserlaminats betrachtet zwischen den beiden Trägervliesen Bereiche mit absorptionsfähigem Fasermaterial vorliegen und Bereiche, in denen die beiden Trägervliese direkt aufeinander treffen.

Auf diese Weise werden Bereiche geschaffen, in denen die beiden Trägervliese, die die Außenlagen bilden, direkt miteinander verbunden werden. Die Stabilität gegenüber Delamination wird hierdurch deutlich erhöht. Das haben Versuche gezeigt, in denen die für eine Delaminierung aufzubringenden Kräfte in trockenem und feuchtem Zustand des Faserlaminats gemessen wurden. Die Stabilität in feuchtem Zustand bei einem erfindungsgemäßen Faserlaminat ist gegenüber herkömmlichen Faserläminaten besonders stark erhöht. Das absorptionsfähige Fasermaterial ist jeweils in kassettenartig abgetrennten Bereichen zwischen beiden Trägervliesen vorhanden. Der Gesamteindruck des Faserlaminats ist der eines genoppten Vlieses mit Einschlüssen in der Art einer Steppdecke.

Bei dem Verfahren zur Herstellung eines solchen Faserlaminats kommt ein absorptionsfähiges Fasermaterial zwischen zwei Trägervliese zu liegen. Die drei Lagen, das heißt die beiden Trägervliese mit dem dazwischen befindlichen absorptionsfähigen Fasermaterial, werden mittels Wasserstrahlvernadelung über einer Struktur gebenden gelochten Schablone verfestigt, wobei die Öffnungen in der Schablone gerade so bemessen sind, dass durch die Wasserstrahlbehandlung das absorptionsfähige Fasermaterial zwischen den beiden Trägervliesen seitlich weg von den Stegen der Schablone in Richtung der Öffnungen der Schablone geschwemmt wird. Hierfür ist eine entsprechende Vorrichtung zur Herstellung des Faserlaminats mit einer Struktur gebenden gelochten Schablone ausgestattet, welche Öffnungen von einem Durchmesser zwischen 0,5 und 20 mm aufweist. Diese Öffnungen sind im Gegensatz zu den bereits bekannten Öffnungen in einer mikroporösen Schale deutlich größer bemessen, da sie nicht für die Drainage auftretender Flüssigkeit ausgelegt sind, sondern für die Aufnahme der von den Stegen weggeschwemmten Fasern des absorptionsfähigen Fasermaterials zwischen den zwei Trägervliesen. Die Breite der Stege wird mit Vorteil in einem Bereich zwischen 1 und 5 mm gewählt.

Als Trägervliese werden etwa Spinnvliese oder Schichten aus Stapelfasern verwendet, welche bevorzugt trocken vorverfestigt, zum Beispiel kalandriert. sind.

Das absorptionsfähige Fasermaterial ist vorteilhafter Weise als Pulpschicht, beispielsweise Tissue, oder als superabsorbierende Schicht ausgebildet.

Das Flächengewicht der Trägervliese liegt in der Regel zwischen 3 und 18 g/m², insbesondere zwischen 6 und 10 g/m². Das durchschnittliche Flächengewicht des absorptionsfähigen Fasermaterials liegt vorzugsweise zwischen 8 und 100 g/m², insbesondere zwischen 20 und 50 g/m².

Die Bereiche mit absorptionsfähigem Material sind bevorzugt so über der Fläche des Faserlaminats verteilt, dass sie dem Faserlaminat eine noppenartige Struktur verleihen. Ebenso denkbar ist es, mit derartigen Strukturen beliebiger Geometrie dem Faserlaminat eine optisch ansprechende Gestaltung, beispielsweise in Form eines von mehreren Strukturen gebildeten Blumendekors, zu verleihen.

Die Struktur gebende Schablone ist mit Vorteil als Trommelschale oder als Endlosschale ausgebildet.

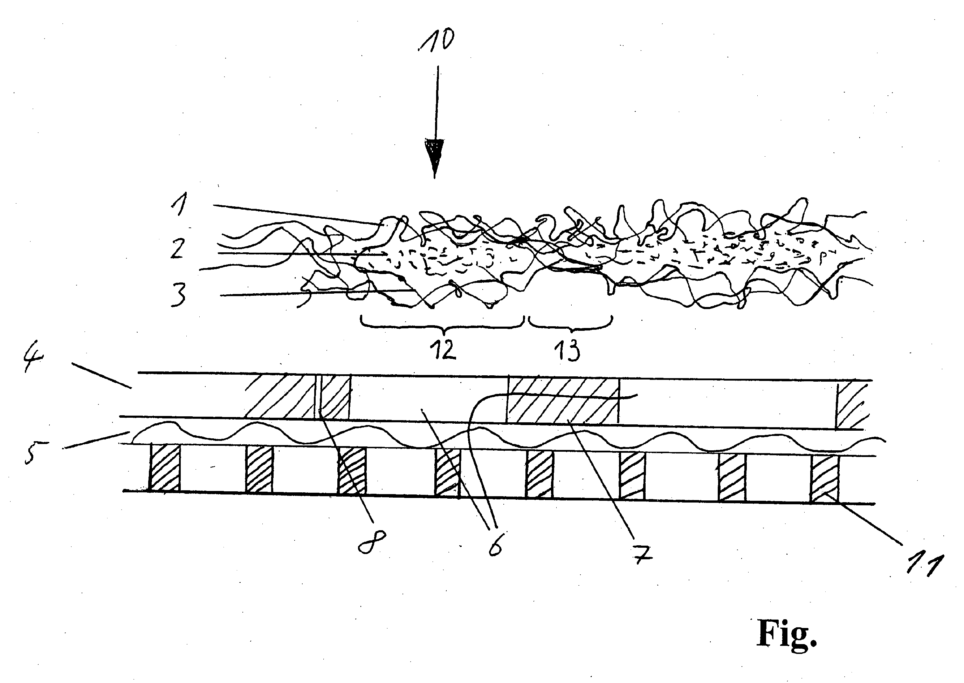

Die Erfindung wird im Folgenden anhand der Zeichnung beispielhaft erläutert.

In einem seitlichen Querschnitt durch ein Faserlaminat über dem Abschnitt einer Trommelschale treffen Wasserstrahlen 10 auf das Faserlaminat, welches oben ein erstes als Spinnvlies ausgebildetes Trägervlies 1, darunter ein absorptionsfähiges Fasermaterial 2 sowie unten ein zweites, ebenfalls als Spinnvlies ausgebildetes Trägervlies 3 umfasst. In einem Bereich 12 über die Fläche des Faserlaminats betrachtet ist absorptionsfähiges Fasermaterial 2 zwischen dem oberen Trägervlies 1 und dem unteren Trägervlies 3 eingeschlossen. In einem Bereich 13 kommen das obere Trägervlies 1 und das untere Trägervlies 3 direkt aufeinander zu liegen. Diese Struktur erklärt sich dadurch, dass die von oben auftreffenden Wasserstrahlen 10 das absorptionsfähige Fasermaterial 2 von einem Steg 7 der Schablone 4 seitlich weg in Richtung der Öffnungen 6 der Schablone 4 schwemmen. Die Wucht der Wasserstrahlen 10 drängt also das absorptionsfähige Fasermaterial 2 buchstäblich vom Steg 7 in Richtung der Öffnungen 6 weg. Unterhalb der Struktur gebenden Schablone 4 befindet sich ein Stützsieb 5, darunter eine stützende Trommelschale 11. Das Stützsieb 5 kann ganz allgemein als poröser Körper oder auch als mikroporöse Schale ausgebildet sein. Neben den Öffnungen 6 der Schablone 4 ist eine deutlich kleinere Kapillaröffnung 8 dargestellt, welche der Abfuhr von Wasser dient und hierfür einen kleineren Durchmesser im Bereich von weniger als 0,45 mm aufweist.

### Bezugszeichenliste

- 1: erstes Trägervlies
- 2: absorptionsfähiges Fasermaterial
- 3: zweites Trägervlies
- 4: Struktur gebende Schablone
- 5: Stützsieb
- 6: Öffnung in der Schablone
- 7: Steg zwischen den Öffnungen der Schablone
- 8: Kapillaröffnung

- 10: Wasserstrahlen
- 11: stützende Trommelschale
- 12: Bereich mit absorptionsfähigem Fasermaterial
- 13: Bereich, in dem die beiden Trägervliese direkt aufeinander treffen

## Patentansprüche

1. Faserlaminat, umfassend zwei Trägervliese (1, 3) und ein zwischen den beiden Trägervliesen (1 , 3) angeordnetes absorptionsfähiges Fasermaterial (2), das durch Wasservernadelung verfestigt ist,
**dadurch gekennzeichnet,**
**dass** über die Fläche des Faserlaminats betrachtet Bereiche (12) mit absorptionsfähigem Fasermaterial (2) zwischen den beiden Trägervliesen (1 , 3) vorliegen und Bereiche (13), in denen die beiden Trägervliese (1 , 3) direkt aufeinander treffen.

2. Faserlaminat nach Anspruch 1, **dadurch gekennzeichnet, dass** die Trägervliese (1 , 3) unabhängig voneinander entweder als eine Schicht Spinnvlies oder als eine Stapelfaserschicht ausgebildet sind.

3. Faserlaminat nach Anspruch 1 oder 2, **dadurch gekennzeichnet, dass** das absorptionsfähige Fasermaterial (2) als Pulpschicht oder als superabsorbierende Schicht ausgebildet ist.

4. Faserlaminat nach einem der vorhergehenden Ansprüche, **dadurch gekennzeichnet, dass** die Trägervliese (1 , 3) trocken vorverfestigt sind,

5. Faserlaminat nach einem der vorhergehenden Ansprüche, **dadurch gekennzeichnet, dass** das Flächengewicht der Trägervliese (1, 3) zwischen 3 und 18 g/m²,insbesondere zwischen 6 und 10 g/m², liegt.

6. Faserlaminat nach einem der vorhergehenden Ansprüche, **dadurch gekennzeichnet, dass** das durchschnittliche Flächengewicht des absorptionsfähigen Fasermaterials (2) zwischen 8 und 100 g/m², insbesondere zwischen 20 und 50 g/m², liegt.

7. Faserlaminat nach einem der vorhergehenden Ansprüche, **dadurch gekennzeichnet, dass** die Bereiche (12) mit absorptionsfähigem Fasermaterial (2) zwischen den beiden Trägervliesen (1, 3) dem Faserlaminat eine noppenartige Struktur verleihen.

8. Verfahren zur Herstellung eines Faserlaminats, umfassend zwei Trägervliese (1 , 3) sowie ein zwischen den beiden Trägervliesen (1 , 3) angeordnetes absorptionsfähiges Fasermaterial (2), wobei das Faserlaminat mit Wasserstrahlvernadelung über einer Struktur gebenden, gelochten Schablone (4) verfestigt wird,
**dadurch gekennzeichnet,**
**dass** durch die Wasserstrahlbehandlung das absorptionsfähige Fasermaterial (2) von den Stegen (7) seitlich weg in Richtung der Öffnungen (6) der Schablone (6) geschwemmt wird.

## Claims

1. Fiber laminate which comprises two carrier webs (1, 3) and absorptive fiber material (2) inserted between the said two carrier webs (1,3) and bonded by hydroentanglement,
**characterized in that**
seen over the surface of the fiber laminate, areas (12) with absorptive fiber material (2) exist between the two carrier webs (1, 3) and areas (13) where the two carrier webs (1, 3) come into direct contact.

2. Fiber laminate according to claim 1, **characterized in that** the carrier webs (1, 3) are formed, independently of each other, either as a layer of spunbond web or a staple fiber layer.

3. Fiber laminate according to claim 1 or 2, **characterized in that** the absorptive fiber material (2) is in the form of a pulp layer or a superabsorbent layer.

4. Fiber laminate according to one of the preceding claims, **characterized in that** the carrier webs (1, 3) are pre-bonded in dry condition.

5. Fiber laminate according to one of the preceding claims, **characterized in that** the areal weight of the carrier webs (1, 3) lies between 3 and 18 g/m², and in particular between 6 and 10 g/m².

6. Fiber laminate according to one of the preceding claims, **characterized in that** the average areal weight of the absorptive fiber material (2) lies between 8 and 100 g/m², and in particular between 20 and 50 g/m².

7. Fiber laminate according to one of the preceding claims, **characterized in that** the areas (12) with absorptive fiber material (2) between the two carrier webs (1, 3) provide the fiber laminate with a knobbed structure.

8. Method for production of a fiber laminate comprising two carrier webs (1, 3) and absorptive fiber material (2) inserted between the said two carrier webs (1,3), wherein the fiber laminate is bonded by hydroentanglement over a structuring perforated template (4),
**characterized in that**
the absorptive fiber material (2) is washed away from the webs (7) sideways by the water jet treatment in the direction of the openings (6) of the template (4).

## Revendications

1. Stratifié de fibres, comprenant deux voiles de support (1, 3) et un matériau fibreux (2) capable d'absorption disposé entre les deux voiles de support (1, 3), qui est solidifié par aiguilletage hydraulique,
**caractérisé en ce que**
observées du dessus de la surface de stratifié de fibres se trouvent des zones (12) comportant un matériau fibreux (2) capable d'absorption entre les deux voiles de supports (1, 3) et des zones (13) dans lesquelles les deux voiles de support (1, 3) se rencontrent directement.

2. Stratifié de fibres selon la revendication 1, **caractérisé en ce que** les voiles de support (1, 3) sont formés indépendamment l'un de l'autre comme une couche de non tissé ou comme une couche de fibres discontinues.

3. Stratifié de fibres selon la revendication 1 ou 2, **caractérisé en ce que** le matériau fibreux capable d'absorption (2) est conçu comme une couche de pâte ou comme une couche super-absorbante.

4. Stratifié de fibres selon l'une des revendications précédentes, **caractérisé en ce que** les voiles de support (1, 3) sont pré-solidifiés à sec.

5. Stratifié de fibres selon l'une des revendications précédentes, **caractérisé en ce que** le grammage des voiles de support (1, 3) se situe entre 3 et 18 g/m², en particulier entre 6 et 10 g/m².

6. Stratifié de fibres selon l'une des revendications précédentes, **caractérisé en ce que** le grammage moyen du matériau d'absorption (2) se situe entre 8 et 100 g/m², en particulier entre 20 et 50 g/m².

7. Stratifié de fibres selon l'une des revendications précédentes, **caractérisé en ce que** les zones (12) comportant un matériau fibreux absorbant (2) entre les deux voiles de support (1, 3) confèrent au stratifié de fibres une structure bouclée.

8. Procédé de production d'un stratifié de fibres, comprenant deux voiles de support (1, 3) et un matériau fibreux (2) capable d'absorption disposé entre les deux voiles de support (1, 3), le stratifié de fibres étant solidifié par aiguilletage hydraulique sur un gabarit (4) perforé constituant une structure,
**caractérisé en ce que**
par le biais du traitement par projection d'eau, le matériau fibreux capable d'absorption (2) est entraîné latéralement (7) des étais en direction des ouvertures (6) du gabarit (6).
